# FASCICULE DE BREVET EUROPEEN

(11) **EP 0 725 466 B1**
(45) Date de publication et mention de la délivrance du brevet: **07.04.1999**
(21) Numéro de dépôt: 96400206.7
(22) Date de dépôt: 29.01.1996
(51) Int. Cl.: H02G 3/04, G02B 6/44

(54) **Dispositif pour subdiviser une conduite d'installation de câbles**
Vorrichtung zum Unterteilen einer Installationskabelröhre
Dividing device for an installation cable duct

(30) Priorité: 31.01.1995 FR 9501119
(43) Date de publication de la demande: 07.08.1996
(73) Titulaire: FRANCE TELECOM, 75015 Paris (FR)
(72) Inventeur: Le Noane, Georges, F-22730 Tregastel (FR); Pecot, Alain, F-22300 Lannion (FR)
(74) Mandataire: Dubois-Chabert, Guy

(56) Documents cités:
- FR-A- 2 580 437
- GB-A- 2 017 967
- GB-A- 2 135 136
- GB-A- 2 161 656
- GB-A- 2 170 926
- US-A- 5 046 815

## Description

### Domaine technique

La présente invention concerne un dispositif pour subdiviser une conduite d'installation de câbles.

### Etat de la technique antérieure

Le développement des nouveaux réseaux de télécommunications à fibres optiques impose de réutiliser l'infrastructure génie civil existante pour le réseau téléphonique par câble multipaires cuivre compte tenu des investissements lourds que représentent ces ouvrages. En effet, cette infrastructure est dimensionnée pour les câbles multipaires cuivre : tubes de gros diamètres, implantation des chambres de tirage tous les 300 mètres etc. Ce génie civil est plus ou moins en bon état: ovalisation, poinçonnement, mauvais état de surface de la paroi interne des tubes.

Les caractéristiques des nouveaux câbles : forte densification, poids faibles, conduisent à mettre en oeuvre ces câbles avec des nouvelles méthodes plus performantes et offrant la possibilité, si besoin, de les poser en grandes longueurs.

L'optimisation du volume disponible dans les tubes existants ou pouvant être libérés après des opérations de regroupement de câbles multipaires cuivre est une nécessité et doit donc être assurée par un tubage ou gainage. Ce gainage a également pour objectif d'assurer la qualité des futurs chemins de câbles (faible coefficient de frottement) afin d'assurer l'installation des câbles optiques dans les meilleures conditions possibles.

Par ailleurs, l'installation de plusieurs câbles dans un même tube soulève différents problèmes comme la pose différée des câbles, la dépose très difficile, ce qui compromet la flexibilité d'exploitation de l'infrastructure.

La technique du tubage d'alvéole avec plusieurs tubes de petits diamètres tirés dans le tube existant a été développée sur les réseaux de FRANCE TELECOM dans les années 85 pour les artères de transport en site urbain ou les réseaux de vidéocommunications. Elle permet de répondre en partie à ce problème. Mais cette technique est limitée au tubage des alvéoles existants de 80 mm de diamètre par trois tubes de 33 mm et quelquefois par cinq tubes de 24 mm. Elle est adaptée à la structure des câbles optiques développés à cette époque.

Les développements actuels s'orientent vers des câbles très denses (grande contenance avec des câbles à microgaines ou à rubans) et également très compacts pour des petites contenances: câbles à fibres multicoeurs par exemple.

Une demande de brevet, GB-A-2 017 967, décrit un câble sous-marin à fibre optique et une méthode de fabrication de celui-ci. Dans ce câble est introduite la combinaison d'une couche cylindrique mince résistante à la pression et d'un élément de renforcement situé dans celle-ci de façon à diviser le volume interne de cette couche en une pluralité d'espaces et de présenter une résistance suffisante pour supporter une pression déterminée. Au moins une fibre optique faibles pertes est inséré dans chacun de ces espaces.

Une demande de brevet, GB-A-2 135136, décrit un insert pour un tube pour contenir un câble destiné à être utilisé notamment en communication. Cet insert comprend plusieurs gaines en plastique qui peuvent être disposées dans le tube et qui sont destinées à contenir des câbles. Les gaines sont connectées entre elles sur toute leur longueur au moyen de nervures flexibles, de manière à former un ensemble plat de gaines, qui peut être mis sous la forme d'un faisceau de gaines connectées entre elles, se touchant les unes les autres, lors d'une introduction dans le tube.

La présente invention a pour objet d'apporter une solution de gainage ou tubage qui permettent d'optimiser le volume disponible dans les alvéoles à réutiliser, et tenant compte de la densification des nouveaux câbles à fibres optiques.

### Exposé de l'invention

La présente invention concerne un dispositif pour subdiviser une conduite d'installation de câbles, qui comprend au moins un profilé multi-alvéolaire, formé au moins de trois alvéoles ouvertes vers l'extérieur, destiné à être introduit dans une conduite extérieure, caractérisé en ce qu'il est de forme plane, pouvant prendre une configuration en couronne par une solidarisation des deux extrémités dudit dispositif. Avantageusement ce profilé constitue une couronne entourant un passage central.

Dans une variante de réalisation, ce dispositif est de forme plate, pouvant prendre une configuration en couronne par un clipsage des deux extrémités dudit dispositif. Le profilé peut également être refermé sur lui-même, la fermeture se faisant sensiblement au milieu d'une alvéole par recouvrement des deux languettes dont l'épaisseur est moitié de celle de l'épaisseur courante. L'alvéole « fermeture » ainsi réalisée présente une largeur variable en fonction des variations éventuelles du diamètre intérieur de la conduite à gainer.

Avantageusement chaque alvéole du profilé est définie par une section cylindrique tronquée de façon à obtenir une ouverture légèrement inférieure au diamètre nominal qui permet, le cas échéant, le maintien d'un câble dans ladite alvéole.

Ainsi la présente invention décrit un gainage avec un profilé multi-alvéolaire qui permet d'apporter une nouvelle solution à la réutilisation du génie civil pour les réseaux de distribution à fibres optiques.

Dans un exemple de réalisation chaque alvéole a un diamètre nominal de 20 mm, le dispositif comportant neuf alvéoles périphériques offrant un diamètre de passage d'environ 10 mm de manière à permettre le gainage d'un tube 56/60 mm. Le passage central peut contenir un autre profilé multi-alvéolaire prévu à cet effet, ou éventuellement des alvéoles étanches sous forme de tubes.

Avantageusement ces alvéoles étanche, sous forme de tubes, assurent trois ou quatre passages cylindriques de 16 mm. Ces alvéoles étanches peuvent former un profilé multitube.

Dans un autre exemple de réalisation chaque alvéole a un diamètre nominal de 16 mm, le dispositif de l'invention comportant dix alvéoles périphériques de manière à permettre le gainage d'une conduite de diamètre 56/60 mm, permettant l'installation de dix câbles de 6 à 8 mm environ.

Le passage central peut alors être utilisé pour passer un profilé spécial offrant trois sections circulaires pour l'installation de trois câbles de 10 mm environ. Il peut être également utilisé pour passer un tube de 20 mm pour l'installation d'un câble de 14 mm.

Dans un autre exemple de réalisation chaque alvéole a un diamètre nominal de 16 mm, ledit dispositif comportant cinq alvéoles de manière à permettre le gainage d'une conduite de diamètre 41,4/45 mm.

Avantageusement le dispositif de l'invention peut comporter plusieurs profilés multi-alvéolaires concentriques pour traiter le gainage de conduites de gros diamètres.

Avantageusement le dispositif de l'invention utilise des matériaux différents pour la partie périphérique du profilé multi-alvéolaire et la partie alvéoles centrales située dans le passage central de ce profilé.

Le (ou les) matériau(x) du profilé est (sont) choisi(s) en fonction de plusieurs critères :
- la tenue en pression ;
- la tenue en traction ;
- la souplesse ;
- le conditionnement sur bobines du profilé ;
- un bon coefficient de frottement.

Deux types de solutions peuvent être, par exemple, envisagés :
- un matériau à base de polyéthylène
   - dans une réalisation à trois couches : une première couche intérieure fine avec un bon coefficient de frottement en polyéthylène additivé ou réticulé, une seconde couche médiane en polyéthylène recyclé (donc économique), une troisième couche extérieure en polyéthylène normal, électrosoudable permettant de faire des raccords,
   - dans une réalisation bicouche : une couche intérieure en polyéthylène présentant un bon coefficient de frottement et une couche extérieure en polyéthylène normal, avec un liant entre les deux,
   - dans une autre réalisation bicouche : une couche intérieure en PVC (polychlorure de vinyle) et une couche extérieure en polyéthylène avec un liant entre les deux ;
- un matériau à base de PVC
   - dans une réalisation bicouche : une couche extérieure en PVC plastifié, et une couche intérieure en PVC rigide,
   - dans une réalisation à trois couches : une couche extérieure et une couche intérieure en PVC rigide et une couche médiane en PVC expansé.
La solution PVC est la plus économique. Elle permet, de plus, un collage facile.

Avantageusement le clipsage peut être réalisé par un emboîtement de type mâle-femelle, celui-ci étant intégré dans l'épaisseur du profilé, ou à l'aide d'une petite languette spécifique. Il peut également être réalisé en utilisant un élément en forme de Ω qui permet de maintenir les deux bords au contact après qu'ils aient été plaqués l'un sur l'autre.

Avantageusement l'installation des câbles sur de grandes longueurs est en priorité faite dans les alvéoles étanches dans la partie centrale du profilé multi-alvéolaire. L'installation des câbles de distribution de courtes longueurs est faite dans les alvéoles périphériques du profilé multi-alvéolaire soit par poussage, les structures des câbles étant alors optimisées en raideur, soit par tirage grâce à un filin préinstallé dans chaque alvéole du profilé.

Avantageusement l'installation des câbles a lieu en même temps que la mise en oeuvre du profilé dans la conduite existante. On place alors un câble dans chaque alvéole depuis différents tourets de câbles situés à côté du touret de gainage, le profilé servant d'élément tracteur, les câbles étant simplement "transportés" dans la conduite.

Avantageusement le dispositif de l'invention est utilisé pour la mise en place des nouveaux réseaux à fibres optiques.

### Brève description des dessins

- Les figures 1A et 1B illustrent le dispositif de l'invention dans une vue en coupe du profilé multi-alvéolaire et dans une vue en perspective de l'ensemble du dispositif;
- la figure 2 illustre une variante du dispositif de l'invention ;
- les figures 3 à 5, 9 et 10 illustrent des exemples de gainage d'une conduite 56/60 mm avec le dispositif de l'invention ;
- les figures 6 à 8 illustrent des solutions de tubage classique pour une conduite 56/60 mm ;
- les figures 11 à 13 illustrent des exemples de gainage d'une conduite 41,4/45 mm avec le dispositif de l'invention.

### Exposé détaillé de modes de réalisation

L'étude de la répartition des longueurs de câbles installées dans l'infrastructure des réseaux par câbles cuivre fait apparaître les points suivants :
- la longueur moyenne en partie transport (définie entre le central de rattachement et la sous-répartition) est de 2200 m (dont 25 % des longueurs comprises entre 2500 et 5000 m et 20 % des longueurs comprises entre 500 et 1000m) ;
- la longueur moyenne en distribution (définie entre la sous répartition et le point de branchement) est de 500 m (dont plus de la moitié des longueurs comprises entre 100 et 500 m alors que les longueurs comprises entre 500 et 1000 m ne représentent qu'environ 20 % des longueurs).

Les longueurs de câbles à installer sont donc très variables :
- en transport on a généralement à traiter la pose de câbles en grande longueur (le pas de 2400 m défini pour les câbles à fibres optiques de transport peut éventuellement être repris). Des méthodes performantes mises au point sur l'infrastructure de transport de type DRN (soufflage des câbles) peuvent être transposées ; voire la possibilité d'introduire de nouvelles méthodes (comme le portage dans l'eau ou le tirage dans des conduites préaiguillées par exemple). Mais ces méthodes imposent un conduit étanche et continu sur toute la section à poser. Ceci suppose donc un tubage offrant de bonnes caractéristiques mécaniques (tenue en pression, bon coefficient de frottement...) et permettant d'assurer la continuité dans les chambres intermédiaires (parfois très nombreuses dans les réseaux de distribution) pour optimiser le temps et les moyens d'installation ;
- en distribution on a également à traiter le cas de courtes longueurs de l'ordre de quelques centaines de mètres. Ces câbles ne sont pas installés avec des techniques très sophistiquées, mais on se rapproche de techniques utilisées par les monteurs sur chantier dans les cas d'installation de petits câbles légers en faisant appel à des techniques simples comme le poussage. Ceci suppose des câbles présentant de bonnes caractéristiques au flambement et un passage en conduite présentant un bon état de surface mais pas nécessairement une étanchéité radiale.

Le cas des câbles de distribution de plus grandes longueurs (la limite poussage est à préciser) est traité comme le câbles de transport avec des techniques plus sophistiquées nécessitant un tube étanche.

Sur une même artère de génie civil on peut trouver à la fois des câbles de transport de grande longueur (2400 m), des câbles de distribution de longueurs importantes (supérieures à 600 m) nécessitant pour l'installation un tube continu et des câbles de distribution de courtes longueurs ne nécessitant, a priori, qu'un simple passage en bon état. L'invention a pour objet de permettre de résoudre ce problème.

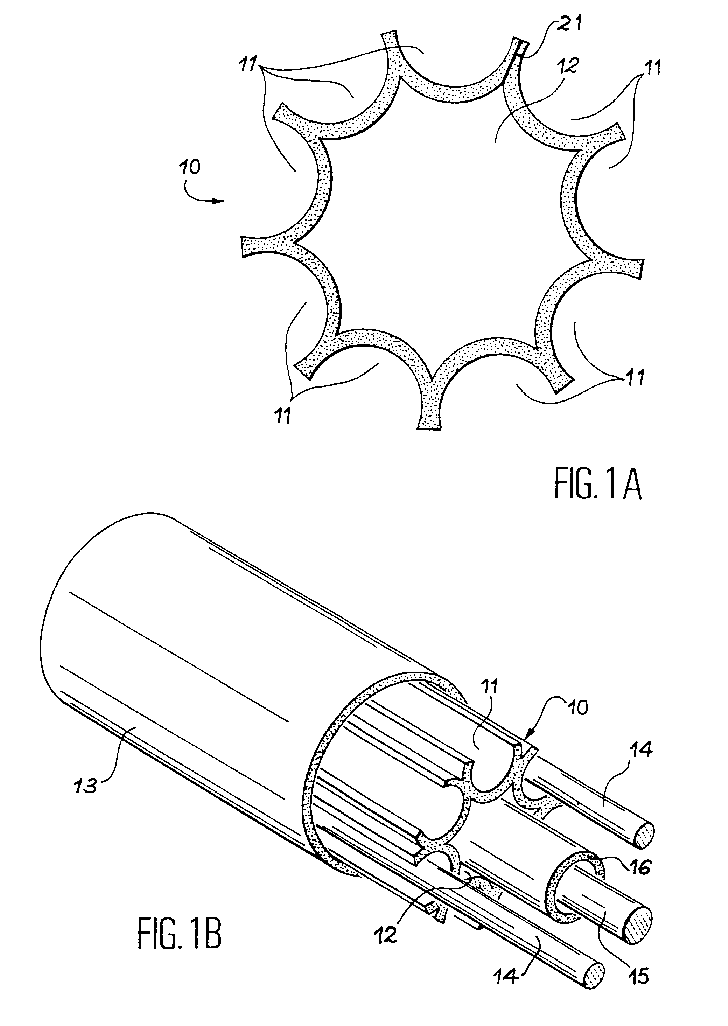

L'invention concerne un profilé multi-alvéolaire qui, comme représenté sur la figure 1A, constitue une couronne 10 comportant plusieurs cellules 11 ouvertes vers l'extérieur formant un passage intérieur 12. Sur la figure 1B ce profilé est introduit dans une conduite extérieure 13, avec installation de câbles : de premiers câbles 14 étant introduits dans les alvéoles périphériques 11 du profilé, un câble 15 étant passé dans un tube 16 lui-même introduit dans le passage central 12 du profilé 10.

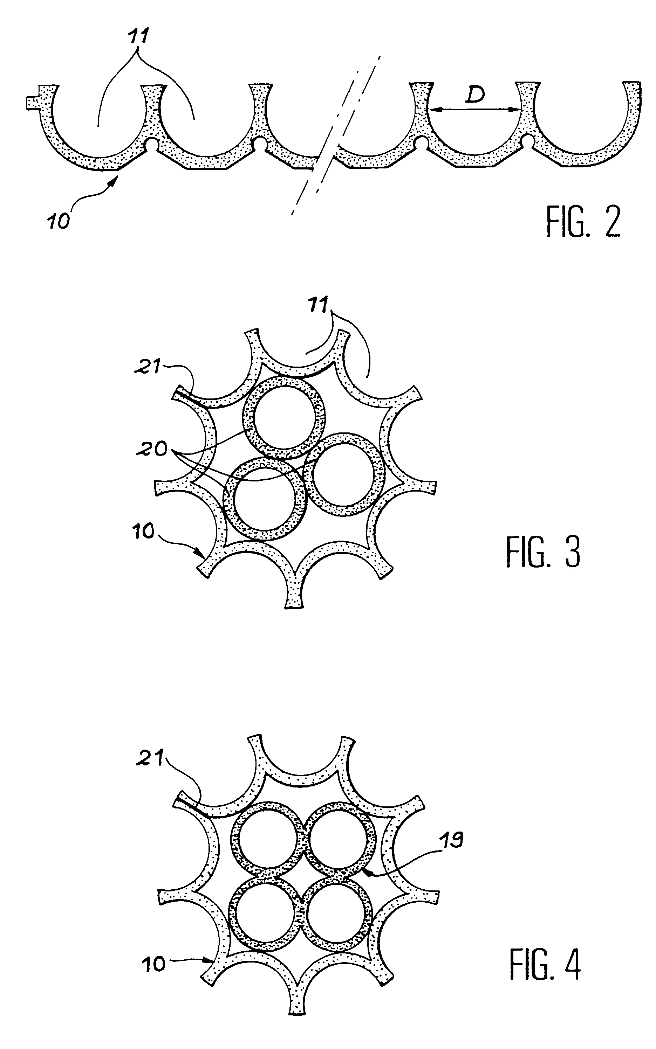

Ce profilé peut être fabriqué à l'origine à plat, comme représenté sur la figure 2. On reconstitue dans ce cas la configuration en couronne par une solidarisation des deux extrémités du profilé, par exemple par clipsage 21. Le choix du matériau et de la géométrie permet de faciliter cette reconformation, qui peut être effectuée directement sur le chantier de gainage, ce qui permet alors de simplifier le conditionnement et le transport du profilé de gainage.

Sur la figure 1, le profilé plan est reconfiguré en couronne par solidarisation des deux extrémités du profilé. Cette mise en couronne est effectuée sur le site au moment de l'introduction du profilé dans la conduite à gainer. Pendant la phase conditionnement et transport le profilé est sous sa forme plane, ce qui limite de façon significative le volume et donc l'encombrement.

On n'a pas nécessairement besoin d'un système de clipsage comme représenté sur la figure 1. Le profilé peut être refermé sur lui-même : la fermeture peut se faire sensiblement au milieu d'une alvéole par recouvrement de deux languettes dont l'épaisseur est moitié de celle de l'épaisseur courante. L'alvéole "fermeture" ainsi réalisée présente une largeur variable en fonction des variations éventuelles du diamètre intérieur de la conduite à gainer. Cette alvéole de fermeture peut être munie d'un repérage (par marquage à l'encre par exemple qui est facile à obtenir sur des matériaux tels que le PVC). Ce marquage permet, outre l'identification de cette alvéole particulière, un repérage des différentes alvéoles par une indexation à partir de cette alvéole repérée. Ceci permet de faciliter l'exploitation et la gestion des alvéoles périphériques lors de l'installation des réseaux. L'avantage de ce système de recouvrement est d'offrir une certaine déformabilité du profilé en couronne pour faciliter son introduction dans la conduite à gainer. Cette possibilité de déformation permet également d'absorber des ovalisations ou déformations ponctuelles le long de la conduite à gainer.

Dans le profilé de l'invention la partie centrale et les alvéoles périphériques peuvent être réalisés en un même matériau ou en deux matériau différents.

Ce (ou ces) matériau(x) est (sont) choisi(s) en fonction de plusieurs critères :
- la tenue en pression : par exemple environ 15 bars pendant deux à trois heures ;
- la tenue en traction : par exemple environ 300 decaNewton ;
- la souplesse: par exemple 15 à 20 fois le diamètre circonscrit autour du profilé ;
- le conditionnement sur bobines du profilé : par exemple possibilité d'un diamètre d'enroulement de 1,6 m ;
- un bon coefficient de frottement.

Deux types de solutions peuvent être, par exemple, envisagées :
- un matériau à base de polyéthylène
   - dans une réalisation à trois couches : une première couche intérieure fine avec un bon coefficient de frottement en polyéthylène additivé ou réticulé, une seconde couche médiane en polyéthylène recyclé (donc économique), une troisième couche extérieure en polyéthylène normal, électrosoudable permettant de faire des raccords,
   - dans une réalisation bicouche : une couche intérieure en polyéthylène présentant un bon coefficient de frottement et une couche extérieure en polyéthylène normal, avec un liant entre les deux,
   - dans une autre réalisation bicouche : une couche intérieure en PVC (polychlorure de vinyle) et une couche extérieure en polyéthylène avec un liant entre les deux ;
- un matériau à base de PVC
   - dans une réalisation bicouche : une couche extérieure en PVC plastifié, et une couche intérieure en PVC rigide ; avec une telle réalisation, par exemple, on a réalisé un profilé de 1,5 mm environ d'épaisseur pour des gaines de faible diamètre et un profilé d'environ 2 mm d'épaisseur pour des gaines de plus gros diamètre,
   - dans une réalisation à trois couches : une couche extérieure et une couche intérieure en PVC rigide et une couche médiane en PVC expansé.

La solution PVC est la plus économique. Elle permet, de plus, un collage facile.

Le clipsage 21 peut être réalisé par exemple par un emboîtement de type mâle-femelle, celui-ci étant intégré dans l'épaisseur du profilé, ou à l'aide d'une petite languette spécifique. Il peut également être réalisé en utilisant un élément en forme de Ω qui permet de maintenir les deux bords au contact après qu'ils aient été plaqués l'un sur l'autre.

Chaque alvéole 11 du profilé 10 est définie par une section cylindrique tronquée de façon à obtenir une ouverture légèrement inférieure au diamètre nominal qui permet, le cas échéant, le maintien du câble dans l'alvéole, notamment dans les chambres intermédiaires, là ou la conduite 13 existante, par exemple en PVC, n'est pas continue.

Le profilé le l'invention a comme particularité de présenter en périphérie de simples cellules pour assurer, par exemple, l'installation par poussage des câbles de distribution de courtes longueurs et en partie centrale des tubes ou un profilé multitubes pour assurer l'installation par soufflage (ou autre) en grandes longueurs des câbles de transport et distribution.

La partie centrale est laissée en continuité dans les chambres intermédiaires (installation des câbles en grandes longueurs en une seul opération) alors que le profilé périphérique est soit interrompu à chaque chambre, soit laissé en continuité comme la partie centrale puisqu'il permet, en l'absence de la conduite, par exemple en PVC (polychlorure de vinyle) dans la chambre, d'accéder directement aux câbles de distribution pour une dérivation dans la chambre vers les points de branchement.

### Exemples de gainage d'une conduite 56/60 mm

Les exemples illustrés sur les figures 3, 4, 5 représentent le cas du gainage d'une conduite 13 de diamètre 56/60 mm (diamètres intérieur et extérieur), par exemple en PVC, avec un profilé multi-alvéolaire de diamètre nominal 20 mm. Dans ces conditions on voit que l'on aménage ainsi neuf cellules périphériques 11 offrant un diamètre de passage de 10 mm environ soit l'installation possible de câbles 6 à 8 mm de diamètres.

Le volume dégagé dans le passage central du profilé peut être utilisé pour y placer un autre profilé multi-alvéolaire dimensionné à cet effet. On peut également l'utiliser pour y installer des alvéoles étanches en tube de diamètre extérieur 16 mm. On voit ainsi que l'on peut, en plus des neuf passages périphériques, assurer trois à quatre passages 20 cylindriques de 16 mm. Le cas des quatre tubes de 16 mm n'est possible que si on extrude un profilé spécial multitube 19 ayant pour caractéristique une paroi commune entre les tubes (optimisation de la matière et du volume). La référence 21 correspond à un plan de raccordement éventuel.

Ainsi dans une conduite 56/60 mm, on peut réaliser l'installation de neuf câbles de 6 à 8 mm et le passage central dans des tubes étanches de trois à quatre câbles de diamètres 10 mm environ.

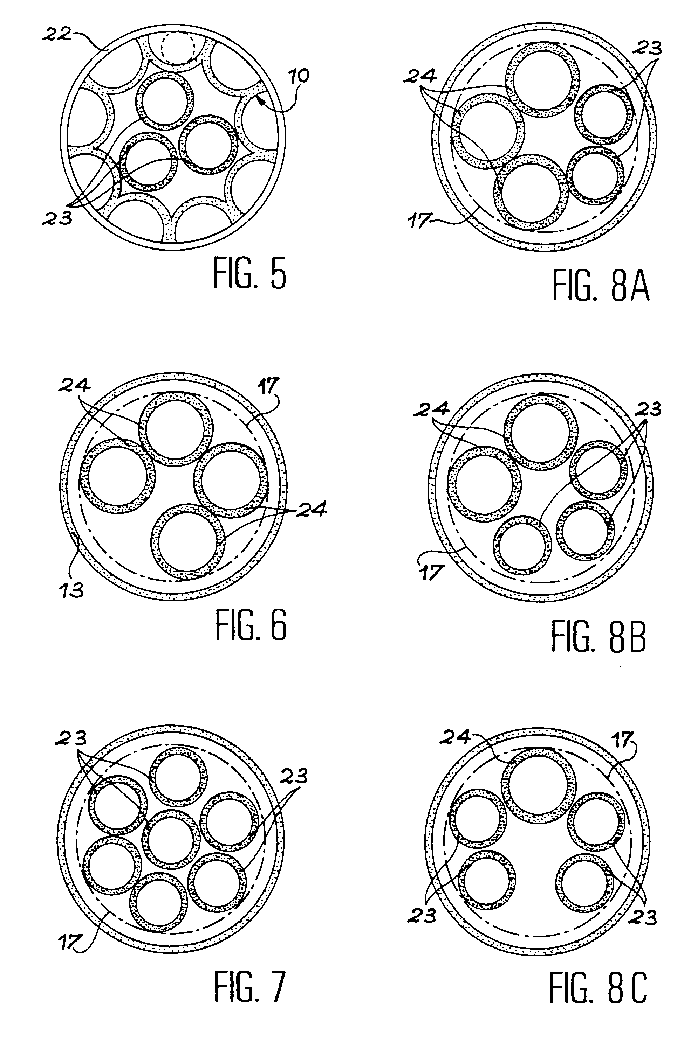

Sur la figure 5, qui représente une vue en bout d'une conduite tubée, est également représentée une conduite 56/60 référencée 22, les tubes 23 étant des tubes standard de diamètre 16 mm.

La solution tubage classique aurait abouti pour la conduite de 56/60 mm à aménager seulement quatre passages 24 en diamètre extérieur 20 mm, comme représenté sur la figure 6: soit l'installation de quatre câbles de diamètre 14 mm. Le cercle discontinu 17 représente le diamètre utile du tube 13 ; une certaine déformation (par exemple par poinçonnement) étant en effet possible.

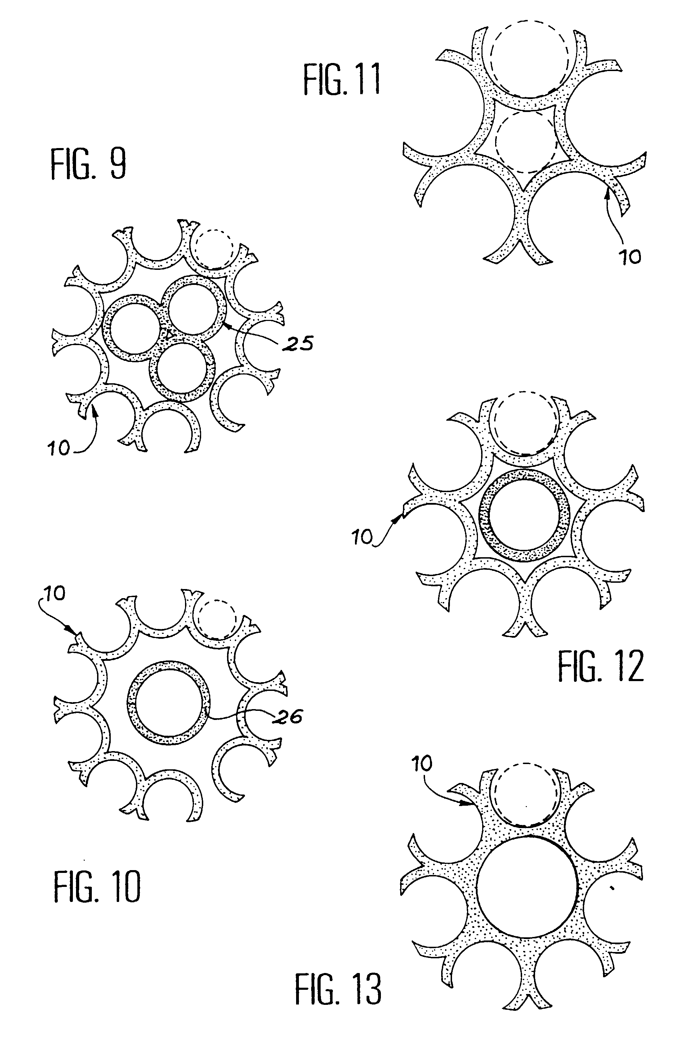

Les figures 9 et 10 représentent un profilé multi-alvéolaire basé sur un diamètre nominal de 16 mm, ce qui permet le positionnement de dix cellules périphériques permettant l'installation de dix câbles de diamètre 6 à 8 mm environ. Le passage central peut être utilisé pour passer un profilé spécial 25 offrant trois sections circulaires pour l'installation de trois câbles de 10 mm environ ou un tube 26 de 20 mm pour l'installation d'un câble de 14 mm. Sur ces figures 9 et 10 le profilé est représenté non fermé pour illustrer la possibilité de clipsage de ses deux extrémités.

Une solution tubage classique aurait abouti à sept passages 23 en diamètre 16 mm, comme représenté sur la figure 7, (installation de sept câbles de 10 mm) ou encore, cinq passages en combinant les diamètres 16 et 20 mm, comme représenté sur les figures 8A, 8B et 8C, (le mixage des diamètres n'est cependant pas prévu dans la solution tubage utilisée jusqu'à maintenant).

Le profilé multi-alvéolaire de l'invention combiné à un tubage central permet, dans le cas de la réutilisation d'une conduite de diamètre 56/60 mm l'installation potentielle de douze à treize câbles (neuf de diamètre 6 à 8 mm et trois à quatre de diamètre 10 mm) au lieu de quatre ou sept câbles (respectivement de diamètre 14 mm ou 10 mm) avec un tubage classique. Ceci suppose bien entendu qu'à contenance égale on augmente la compacité des câbles.

### Exemples de gainage d'une conduite 41,4/45 mm

La figure 11 illustre un profilé multi-alvéolaire que l'on peut définir pour traiter le cas du gainage des conduites existantes en 41,4/45 mm, par exemple en PVC, sur la base d'un diamètre nominal de 20 mm, ou sur la base d'un diamètre nominal de 16 mm (figures 12 et 13). La figure 13 illustre un profilé et un tube intérieur formant un même ensemble qui peut être obtenu en une seule passe d'extrusion, ce qui permet d'obtenir une optimisation de l'épaisseur.

On voit également que dans le cas d'une conduite 41,4/45 mm on peut installer six à huit câbles pour deux à trois dans la solution tubage classique (qui n'existe d'ailleurs pas à ce jour pour ce diamètre).

Bien entendu le dispositif de gainage de l'invention peut être étendu à d'autres diamètres comme les conduites PVC de 75/80 ou 77/80 mm (dont la faible résistance à l'ovalisation engendre des problèmes lorsqu'on veut optimiser le volume disponible en tubage classique) ou les conduites unitaires en béton de diamètre 100 ou 150 mm. Deux, ou plus, profilés multi-alvéolaires concentriques peuvent être conçus pour traiter le gainage des tubes de gros diamètres.

La forme géométrique du profilé 10 peut également être mieux définie en fonction des matériaux (on peut par exemple utiliser des matériaux différents pour la partie périphérique multi-alvéole et la partie alvéoles centrales étanches), des conditions d'extrusion et de conditionnement (sur touret ou autres) retenues. Elle peut également être affinée en fonction des structures de câbles densifiées (connaissance des diamètres de câbles en structure microgaines, rubans ou même à fibres multicoeurs). L'ingénierie d'installation des futurs réseaux peut également infléchir la forme définitive en fonction des contenances des câbles retenues: répartition dans le réseau des petites et plus grosses contenances de câbles...

L'installation des câbles sur de grandes longueurs (de 600 m environ à 2400 m) est en priorité faite dans les alvéoles étanches de la partie centrale du profilé, avec des méthodes performantes (soufflage, tirage avec filin préaiguillé, voire portage dans l'eau ..). Ils sont installés en une seule opération grâce à la continuité des alvéoles dans les chambres intermédiaires avec une équipe de pose réduite (une équipe de trois à quatre agents est envisageable pour mener ce genre d'opération alors qu'une dizaine d'agents est aujourd'hui nécessaire pour une pose par tirage en grande longueur en site urbain).

L'installation des câbles de distribution de courtes longueurs (quelques centaines de mètres) est faite dans les alvéoles périphériques non étanches avec des méthodes simples, ne nécessitant par de mise en oeuvre de matériels importante. Ils sont installés :
- soit par des méthodes de poussage : pour ce faire les structures de câbles sont optimisées en raideur;
- soit par tirage grâce à un filin préinstallé dans chaque alvéole du profilé par fabrication en usine, ou au moment de la mise en oeuvre du gainage sur le site.

On peut également installer les câbles en même temps que la mise en oeuvre du profilé dans la conduite existante. Comme les alvéoles sont ouvertes, il est possible de placer un câble dans chacune de celles-ci depuis différents tourets de câbles situés à côté du touret de gainage, grâce à un outillage simple servant de répartiteur, voire d'outil permettant d'écarter les lèvres du profilé pour y placer le câble. Le profilé sert, dans ce cas, d'élément tracteur, les câbles étant simplement "transportés" dans la conduite. On peut ainsi faire le gain de l'opération d'installation des câbles (ou d'une partie des câbles) sous réserve, bien évidemment, d'une bonne coordination entre l'opération de remise à niveau du génie civil et d'installation des câbles du réseau.

Ce principe peut être appliqué à la mise en oeuvre des filins de tirage au moment du gainage. Dans ce cas il n'est pas nécessaire de préinstaller les filins en usine (cette opération peut se révéler contraignante vis-à-vis du processus de fabrication du profilé par extrusion).

Les câbles sont directement accessibles dans les alvéoles pour faire des "reprises" de tirage ou de poussage dans les chambres de passage. Ces alvéoles offrent, par ailleurs, la possibilité de changer d'itinéraire dans les chambres intermédiaires en plaçant le câble dans un alvéole de gainage en direction du point à raccorder par changement de "routage" du câble entre le tube arrivant dans la chambre et le tube sortant.

Le système de gainage de l'invention permet de résoudre le problème de remise à niveau du génie civil existant tout en optimisant le volume libre dans les conduites PVC. Ce profilé permet d'aller plus loin que le tubage classique en optimisant les coûts du produit et des opérations d'installation de câbles dans les différents cas de pose: en grandes longueurs et en courtes longueurs pour la distribution.

Il permet de conserver la grande flexibilité que présente le principe d'installer un câble dans un alvéole: la souplesse d'exploitation du réseau reste préservée pour mener les opérations d'installation, de dépose et de repose de câbles en fonction des besoins d'évolution des réseaux.

Bien évidemment, la mise en oeuvre du profilé de l'invention est possible dans une conduite partiellement occupée par un petit câble.

## Revendications

1. Dispositif pour subdiviser une conduite d'installation de câbles, comprenant au moins un profilé multi-alvéolaire (10) formé d'au moins trois alvéoles (11) ouvertes vers l'extérieur, destiné à être introduit dans une conduite extérieure (13), caractérisé en ce qu'il est de forme plane, pouvant prendre une configuration en couronne par une solidarisation (21) des deux extrémités dudit dispositif.

2. Dispositif selon la revendication 1, caractérisé en ce qu'il constitue une couronne, entourant un passage central (12).

3. Dispositif selon la revendication 1, caractérisé en ce qu'il prend une configuration en couronne par un clipsage (21) des deux extrémités dudit dispositif.

4. Dispositif selon la revendication 1, caractérisé en ce que le profilé est refermé sur lui-même, la fermeture se faisant sensiblement au milieu d'une alvéole par recouvrement de deux languettes dont l'épaisseur est moitié de celle de l'épaisseur courante.

5. Dispositif selon la revendication 1, caractérisé en ce que chaque alvéole (11) du profilé est définie par une section cylindrique tronquée de façon à obtenir une ouverture légèrement inférieure au diamètre nominal qui permet, le cas échéant, le maintien d'un câble dans ladite alvéole.

6. Dispositif selon la revendication 2, caractérisé en ce que le passage central (12) contient un autre profilé multi-alvéolaire prévu à cet effet.

7. Dispositif selon la revendication 2, caractérisé en ce que le passage central contient au moins deux alvéoles étanches sous forme de tubes.

8. Dispositif selon la revendication 7, caractérisé en ce que ces alvéoles étanches forment un profilé multitube.

9. Dispositif selon la revendication 2, caractérisé en ce qu'il comporte au moins deux profilés multi-alvéolaires concentriques pour traiter le gainage de conduites de gros diamètres.

10. Dispositif selon la revendication 2, caractérisé en ce qu'il utilise des matériaux différents pour les alvéoles périphériques et pour la partie centrale.

11. Dispositif selon la revendication 1, caractérisé en ce que le profilé est réalisé en au moins un matériau choisi en fonction d'au moins un des critères suivants : la tenue en pression, la tenue en traction, la souplesse, le conditionnement sur bobines, le coefficient de frottement.

12. Dispositif selon la revendication 11, caractérisé en ce que ce matériau est à base de polyéthylène ou à base de PVC.

13. Dispositif selon la revendication 12, caractérisé en ce que le profilé est formé de trois couches: une première couche intérieure fine avec un bon coefficient de frottement en polyéthylène additivé ou réticulé, une seconde couche médiane en polyéthylène recyclé, une troisième couche extérieure en polyéthylène normal.

14. Dispositif selon la revendication 12, caractérisé en ce que le profilé est formé de deux couches: une couche intérieure en polyéthylène présentant un bon coefficient de frottement et une couche extérieure en polyéthylène normal, avec un liant entre les deux.

15. Dispositif selon la revendication 12, caractérisé en ce que le profilé est formé de deux couches : une couche intérieure en PVC et une couche extérieure en polyéthylène avec un liant entre les deux.

16. Dispositif selon la revendication 12, caractérisé en ce que le profilé est formé de deux couches: une couche extérieure en PVC plastifié et une couche interne en PVC rigide.

17. Dispositif selon la revendication 12, caractérisé en ce que le profilé est formé de trois couches: une couche extérieure et une couche intérieure en PVC rigide, et une couche intermédiaire en PVC expansé.

18. Dispositif selon la revendication 3, caractérisé en ce que le clipsage est réalisé par un emboîtement de type mâle-femelle.

19. Dispositif selon la revendication 3, caractérisé en ce que le clipsage est réalisé en utilisant un élément en forme de Ω.

20. Dispositif selon l'une quelconque des revendications précédentes, caractérisé en ce que des câbles sur de grandes longueurs sont installés en priorité dans des alvéoles étanches dans la partie centrale du profilé multi-alvéolaire.

21. Dispositif selon la revendication 20, caractérisé en ce que des câbles de distribution de courtes longueurs sont installés dans les alvéoles périphériques du profilé multi-alvéolaire soit par poussage, les structures des câbles étant alors optimisées en raideur, soit par tirage grâce à un filin préinstallé dans chaque alvéole du profilé.

22. Dispositif selon l'une quelconque des revendications 1 à 19, caractérisé en ce que les câbles sont installés en même temps que le profilé est mis en oeuvre dans la conduite existante, un câble étant placé dans chaque alvéole depuis différents tourets de câbles situés à côté du touret de gainage, le profilé servant d'élément tracteur, les câbles étant simplement "transportés" dans la conduite.

23. Dispositif selon l'une quelconque des revendications précédentes, caractérisé en ce qu'il est utilisé pour la mise en place des nouveaux réseaux à fibres optiques.

## Patentansprüche

1. Vorrichtung zum Unterteilen einer Installationskabelröhre, die wenigstens ein mehrzellenförmiges Profil (10) mit wenigstens drei nach außen offenen Kanälen (11) umfaßt und dazu bestimmt ist, in eine Außenröhre (13) eingeführt zu werden,
**dadurch gekennzeichnet**,
daß sie von planer Form ist, die durch eine Verbindung (21) der beiden Enden der genannten Vorrichtung eine ring- bzw. kranzförmige Konfiguration annehmen kann.

2. Vorrichtung nach Anspruch 1, dadurch gekennzeichnet, daß sie einen Ring bzw. Kranz bildet, der einen zentralen Durchgang (12) umgibt.

3. Vorrichtung nach Anspruch 1, dadurch gekennzeichnet, daß sie durch ein Klammern bzw. eine Vereinigung (21) der beiden Enden der genannten Vorrichtung eine ring- bzw. kranzartige Form annehmen kann.

4. Vorrichtung nach Anspruch 1, dadurch gekennzeichnet, daß das Profil in sich selbst geschlossen ist, wobei die Schließung im wesentlichen in der Mitte eines Kanals durch Überlappung der beiden Zungen erfolgt, deren Dicke die Hälfte der üblichen bzw. sonstigen Dicke beträgt.

5. Vorrichtung nach Anspruch 1, dadurch gekennzeichnet, daß jeder Kanal (11) des Profils einen zylindrischen Querschnitt aufweist, der derart geschnitten ist, daß man eine Öffnung erhält, die etwas kleiner als der Nominalquerschnitt ist, der ggf. das Halten eines Kabels in dem genannten Kanal ermöglicht.

6. Vorrichtung nach Anspruch 2, dadurch gekennzeichnet, daß der zentrale Durchgang (12) ein anderes, für diesen Zweck vorgesehenes Profil mit mehreren Kanälen enthält.

7. Vorrichtung nach Anspruch 2, dadurch gekennzeichnet, daß der zentrale Durchgang wenigstens zwei dichte Kanäle in Form von Rohren enthält.

8. Vorrichtung nach Anspruch 7, dadurch gekennzeichnet, daß die dichten Kanäle ein mehrröhrenförmiges Profil bilden.

9. Vorrichtung nach Anspruch 2, dadurch gekennzeichnet, daß sie für das Einführen in die Röhren mit großem Durchmesser wenigstens zwei konzentrische mehrzellenförmige Profile umfaßt.

10. Vorrichtung nach Anspruch 2, dadurch gekennzeichnet, daß für die peripheren Kanäle und für den zentralen Teil unterschiedliche Materialien verwendet werden.

11. Vorrichtung nach Anspruch 1, dadurch gekennzeichnet, daß das Profil aus wenigstens einem Material hergestellt wird, das ausgewählt wird in Abhängigkeit von folgenden Kriterien: Druckfestigkeit, Zugfestigkeit, Biegsamkeit, Aufspulbarkeit, Reibungskoeffizient.

12. Vorrichtung nach Anspruch 11, dadurch gekennzeichnet, daß dieses Material ein Material auf der Basis von Polyethylen oder auf der Basis von PVC ist.

13. Vorrichtung nach Anspruch 12, dadurch gekennzeichnet, daß dieses Material durch drei Schichten gebildet wird: erstens einer dünnen Innenschicht mit einem guten Reibungskoeffizienten aus Polyethylen mit Additiven oder vernetzt, zweitens einer Mittelschicht aus recyceltem Polyethylen, drittens einer Außenschicht aus normalem Polyethylen.

14. Vorrichtung nach Anspruch 12, dadurch gekennzeichnet, daß das Profil durch zwei Schichten gebildet wird: eine Innenschicht aus Polyethylen mit guten Reibungskoeffizienten und eine Außenschicht aus normalem Polyethylen, mit einem Bindemittel zwischen beiden.

15. Vorrichtung nach Anspruch 12, dadurch gekennzeichnet, daß das Profil durch zwei Schichten gebildet wird: eine Innenschicht aus PVC und eine Außenschicht aus Polyethylen, mit einem Bindemittel zwischen beiden.

16. Vorrichtung nach Anspruch 12, dadurch gekennzeichnet, daß das Profil durch zwei Schichten gebildet wird: eine Außenschicht aus Weich-PVC und eine Innenschicht aus steifem PVC bzw. Hart-PVC,

17. Vorrichtung nach Anspruch 12, dadurch gekennzeichnet, daß das Profil durch zwei Schichten gebildet wird: eine Außenschicht und eine Innenschicht aus Hart-PVC und eine Zwischensicht aus expandiertem PVC.

18. Vorrichtung nach Anspruch 3, dadurch gekennzeichnet, daß das Vereinigen bzw. Klammern ein Zusammenfügen von der Art Steckelement-Aufnahmeelement ist.

19. Vorrichtung nach Anspruch 3, dadurch gekennzeichnet, daß das Vereinigen bzw. Klammern mit einem Ω-förmigen Element realisiert wird.

20. Vorrichtung nach einem der vorangehenden Ansprüche, dadurch gekennzeichnet, daß Kabel über große Längen vorrangig in den dichten Kanälen im zentralen Teil des mehrzellenförmigen Profils installiert werden.

21. Vorrichtung nach Anspruch 20, dadurch gekennzeichnet, daß Verteilerkabel von kurzer Länge in den peripheren Kanälen des mehrzellenförmigen Profils installiert werden, entweder durch Schieben, wobei die Steifheit der Strukturen der Kabel dann optimiert ist, oder durch Ziehen dank eines in jedem Kanal des Profils vorinstallierten Seils.

22. Vorrichtung nach einem der Ansprüche 1 bis 19, dadurch gekennzeichnet, daß die Kabel gleichzeitig mit dem Profil in die vorhandene Röhre eingeführt werden, indem von mehreren Kabeltrommeln, die sich neben der Einführungstrommel befinden, jeweils ein Kabel kontinuierlich in jeden Kanal eingespeist wird, dabei das Profil als Zugelement dient und die Kabel einfach in die Röhre "hineintransportiert" werden.

23. Vorrichtung nach einem der vorangehenden Ansprüche, dadurch gekennzeichnet, daß sie für die Installation neuer Lichtleitfasernetze verwendet wird.

## Claims

1. Device for subdividing a duct for installing cables, comprising at least one multicelled profile (10) formed from at least three cells (11) open towards the exterior, which is intended to be inserted into an external duct (13), characterized in that it is of a plane form and able to adopt a ring-like configuration by fastening (21) the two ends of the said device.

2. Device according to Claim 1, characterized in that it forms a ring surrounding a central passage (12).

3. Device according to Claim 1, characterized in that it adopts a ring-like configuration by the two ends of the said device being clipped together (21).

4. Device according to Claim 1, characterized in that the profile is closed on itself, the closure being formed appromimately in the middle of a cell by the overlap of two strips whose thickness is half that of the main body of the profile.

5. Device according to Claim 1, characterized in that each cell (11) of the profile is defined by a cylindrical section truncated so as to obtain an opening slightly smaller than the nominal diameter which allows, where appropriate, a cable to be held in place in the said cell.

6. Device according to Claim 2, characterized in that the central passage (12) contains another multicelled profile provided for this purpose.

7. Device according to Claim 2, characterized in that the central passage contains at least two sealed cells in the form of tubes.

8. Device according to Claim 7, characterized in that these sealed cells form a multitube profile.

9. Device according to Claim 2, characterized in that it includes at least two concentric multicelled profiles in order to cope with lining large-diameter ducts.

10. Device according to Claim 2, characterized in that it uses different materials for the peripheral cells and for the central part.

11. Device according to Claim 1, characterized in that the profile is made of at least one material chosen depending on at least one of the following criteria: compressive strength, tensile strength, flexibility, ability to be packaged on reels, friction coefficient.

12. Device according to Claim 11, characterized in that this material is based on polyethylene or based on PVC.

13. Device according to Claim 12, characterized in that the profile is formed from three layers: a thin inner first layer with a good friction coefficient, made of additive-modified or crosslinked polyethylene, a central second layer made of recycled polyethylene and-an outer third layer made of normal polyethylene.

14. Device according to Claim 12, characterized in that the profile is formed from two layers: an inner layer made of polyethylene having a good friction coefficient and an outer layer made of normal polyethylene with a binder between the two.

15. Device according to Claim 12, characterized in that the profile is formed from two layers: an inner layer made of PVC and an outer layer made of polyethylene with a binder between the two.

16. Device according to Claim 12, characterized in that the profile is formed from two layers: an outer layer made of plasticized PVC and an inner layer made of rigid PVC.

17. Device according to Claim 12, characterized in that the profile is formed from three layers: an outer layer and an inner layer made of rigid PVC and an intermediate layer made of foamed PVC.

18. Device according to Claim 3, characterized in that clipping is achieved by means of a snap-fastening mechanism of the male-female type.

19. Device according to Claim 3, characterized in that clipping is achieved by using an Ω-shaped element.

20. Device according to any one of the preceding claims, characterized in that cables in long lengths are installed as a matter of priority in sealed cells in the central part of the multicelled profile.

21. Device according to Claim 20, characterized in that short distribution cables are installed in peripheral cells of the multicelled profile either by pushing, the structures of the cables then being optimized in terms of stiffness, or by pulling by virtue of a rope pre-installed in each cell of the profile.

22. Device according to any one of Claims 1 to 19, characterized in that the cables are installed at the same time as the profile is put into operation in the existing duct, a cable being placed in each cell from various cable reels located beside the lining reel, the profile serving as a pulling element, the cables being simply 'transported' in the duct.

23. Device according to any one of the preceding claims, characterized in that it is used for installing new fibre-optic networks.
